# EUROPEAN PATENT SPECIFICATION

(11) **EP 2 411 199 B1**
(45) Date of publication and mention of the grant of the patent: **16.01.2013**
(21) Application number: 09787672.6
(22) Date of filing: 24.03.2009
(51) Int. Cl.: B29C 45/00, F16B 5/12

(54) **MOULDING METHOD FOR THE MOULDING OF A COMPONENT PROVIDED WITH SNAP-FIT ELEMENTS**
FORMVERFAHREN ZUM FORMEN EINER MIT SCHNAPPELEMENTEN VERSEHENEN KOMPONENTE
PROCÉDÉ DE MOULAGE PERMETTANT LE MOULAGE D'UN COMPOSANT POURVU D'ÉLÉMENTS D'ASSEMBLAGE PAR ENCLIQUETAGE

(43) Date of publication of application: 01.02.2012
(73) Proprietor: UNITEAM ITALIA SRL, 30020 Quarto d'Altino (Venezia) (IT)
(72) Inventor: FIAMMENGO, Fabio, I-31021 Mogliano veneto, Treviso (IT)
(74) Representative: Mitola, Marco
(86) International application number: PCT/IT2009/000111
(87) International publication number: WO 2010/109499

(56) References cited:
- EP-A- 0 499 532
- EP-A- 0 706 875
- JP-A- 61 044 615
- JP-A- 63 216 718
- JP-A- 2004 017 317

## Description

The present invention relates to a moulding method for the moulding of a component provided with snap-fit elements and component thereof made using said moulding method.

The production of moulded components, such as panels, lids, inserts provided with snap-fit elements or clips able to permit the assembly of the component to a relative support, is known of in the art. For instance, panels provided with elastic clips on the inner side destined to face the relative support, enabling the snap-fit of said panel, are made. Preferably the clips are elastic so as to also allow the dismantling of the component in the event of replacement or servicing.

Components of this type are, for instance made in the automotive sector to enable the attachment of strips or inserts on parts of the body, but also to hold the interior door panels to the metal door frames. The applications of such components are in any case numerous: for instance snap-fit plastic panels for applying to parts of electric appliances and so on may be made.

The components of the known art are usually made in plastic by moulding: the piece extracted from the mould has a portion of covering provided on the inner side, so as to be invisible following assembly, with perforated plates able to house the snap-fit elements.

The snap-fit elements are typically made in plastic or rubber and comprise a coupling portion, preferably snap-fit, which fits under pressure to the relative support and a portion attached to the plate. In the art, the insertion of the coupling element to the relative plate of the component is performed manually.

In some cases the operator uses a sort of pneumatic gun which facilitates the insertion operation.

The use of robots specially designed for the assembly of such snap-fit elements is also known of.

Such assembly, given the reduced size of the clip and the considerable number of clips used to attach even small components, is slow and laboursome. In fact the clips often break or are projected outside the component and lost in the assembly area with consequent waste of materials and time.

The assembly operations of the components of the known art are therefore slow and expensive.

To overcome the drawbacks mentioned, moulding of the components provided with clips or appendages in one piece with the said components is also known of in the art.

These embodiments, while on the one hand overcoming the problem of assembly at a later stage of the snap-fit elements, on the other, in the case of breakage of one or more snap-fit elements either during the assembly or dismantling phase, inevitably requires the replacement of the entire component with excessive production and/or servicing costs.

Moreover, the snap-fit elements made in one piece with the component are often subject to breakage during the assembly phase of the component given that the differences of dimensional tolerance between the component and the relative support it is applied to may entail significant distortion and damage to the snap-fit elements in the housing seats. Breakage of the snap-fit elements made in one piece with the component would require replacement of the whole component and therefore lead to unacceptable costs in terms of discards. Document JP-A-63216718 discloses a method in, accordance with the preamble of claim 1.

The purpose of the present invention is to overcome the drawbacks mentioned with reference to the known art.

Such drawbacks are overcome by a method according to claim 1.

Other embodiments of the method and of the component according to the invention are described in the appended claims.

Further characteristics and advantages of the present invention will be more evident from the description below, made by way of a preferred and nonlimiting example of embodiment, wherein:

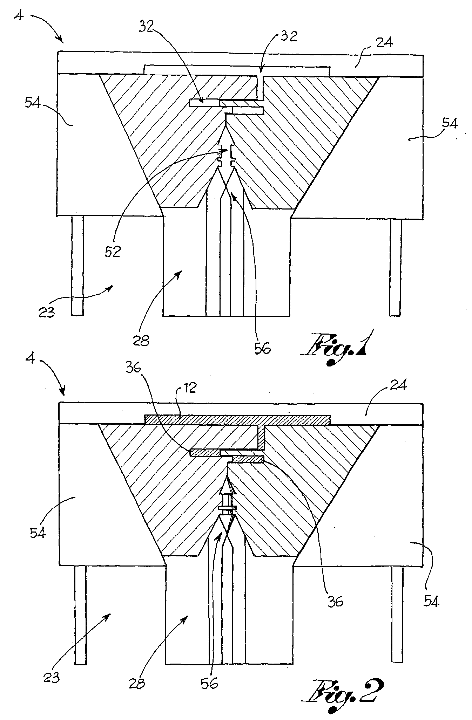

figures 1-4 show schematic cross-section views of the succession of moulding phases of a component according to the method of the present invention;

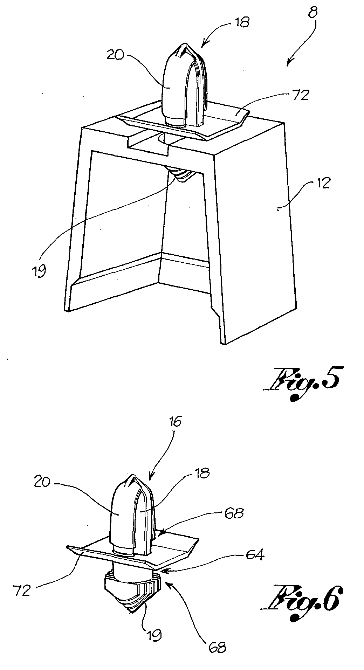

figure 5 shows a perspective view of a moulded component according to the method of the present invention, provided with a respective coupling element;

figure 6 shows a perspective view of a coupling element of the component in figure 5;

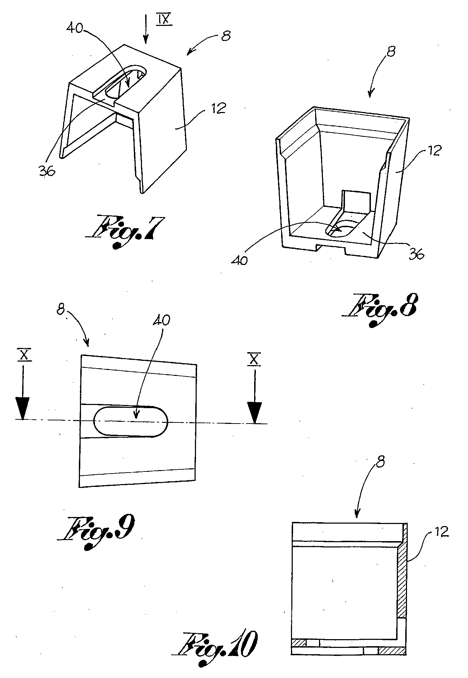

figures 7 and 8 show perspective views, from different angles, of a component produced according to the method of the present invention, without the coupling element;

figure 9 shows an overhead view of the component in figure 7, from the side of the arrow IX in figure 7;

figure 10 shows a cross-section view of the component in figure 7 along the cross-section plane x-x in figure 9.

With reference to the aforesaid figures, reference numeral 4 globally denotes a mould for the moulding of a component 8 provided with a component body 12 and at least one coupling element 16 to attach the component 8 to a relative support (not shown). The coupling element 16 comprises for instance a coupling head 18 able to engage itself, preferably snap-fitting, onto a relative support of the component 8 and a base 19 to attach the coupling element 16 to the component body 12. Preferably, the head 18 is provided with at least one elastic tab 20 to facilitate snap-fitting to a relative support for the component 8.

The moulded component 8 may be of any type: for instance it may be the inner panel of the door of a vehicle, a covering panel for the bodywork of a vehicle, the cover panel of an electric appliance and similar. Preferably, one is speaking of plastic panels provided with snap-fit elements which enable them to be attached to a relative support or wall. The snap-fit elements 16 are joined to the component 8 in a detachable manner so as to enable assembly and dismantling.

The uses listed are merely indicative and should in no way be considered restrictive. In other words, the present invention relates to any type of moulded component 8 without limitations as regards form, material or final application.

The method of the present invention comprises the phase of predisposing the mould 4 comprising at least one punch 23, one moulding cavity 24, one hot chamber 28 for the injection of the plastic material.

In a closed configuration of the mould 4, the moulding cavity 24 and the punch 23 define a first injection chamber 32 which reproduces the shape of the component body 12 in negative, having at least one plate 36 provided with a seat 40 able to receive said coupling element 16, as further described below.

The first injection chamber 32 reproduces the whole component body 12 comprising a number of plates 36 each with a relative seat 40: in other words, the first injection chamber reproduces the component body 12 in one piece.

According to one embodiment, the mould 4 comprises a pair of plugs 48 positioned opposite each other which, in a closed configuration of the mould 4, define the first injection chamber 32.

The plugs 48 also define, inside the mould 4, at least one second injection chamber 52 which reproduces in negative the shape of at least one coupling element 16 suitable for inserting in said seat 40.

Advantageously, the second injection chamber 52 is fluidly separate from the first injection chamber 32; in other words the first and the second injection chamber 32,52 are not communicating, in the closed configuration of the mould 4.

Preferably, the mould 4 comprises a number of second injection chambers 52 each able to mould a respective coupling element 16; all the second injection chambers 52 are fluidly separate from each other and from the first injection chamber 32.

Preferably, the plugs 48 are each made in one piece.

According to one embodiment, the plugs 48 define with the moulding cavity 24 a portion of the component body 12 so as to identify a number of plates 36 with relative seats 40, the plates 36 being mechanically connected to the component body 12. In other words, the portion defined by the moulding cavity 24 and the plugs 48 forms a communal part of the component body 12 which joins together all the plates 36 provided with the relative seats 40.

Advantageously, the plugs 48 define each seat 40 positioning it in line with the second injection chamber 52 of the corresponding coupling element 16 so as to mould the coupling element 16 in line with the respective housing seat 40.

Preferably, the coupling element 16 and the seat 40 are aligned along an X-X axis parallel to an opening/closing direction of the mould 4.

After closing the mould 4, a first injection of plastic material is made inside the first injection chamber 32 so as to muld the component body 12.

A second injection of plastic material is then made inside the second injection chamber 52 so as to mould both the component body 12 and the coupling element 16 in the same mould 4; consequently the component body 12 and the coupling element 16 are moulded separately and independently of each other.

In other words, the component body 12 and the coupling element 16 are moulded so as to have no mechanical connection to each other; preferably the component body 12 and the coupling element 16 are made by injecting plastic materials different from each other.

For instance, the first injection foresees the use of polypropylene for the component body 12 and the second injection foresees the use of polyamide for the snap-fit elements 16. Obviously the materials mentioned are merely indicative and in no way constitute a limitation to the application of the method of the present invention.

Advantageously, between the first injection and the second injection the mould 4 remains closed so as to mould the coupling element 16 in a fixed position aligned with the respective seat 40 of the component body 12, parallel to the axis X-X.

After the second injection the mould 4 is partially opened so as to make available a connection stroke of the coupling element 16 towards the seat thereof 40.

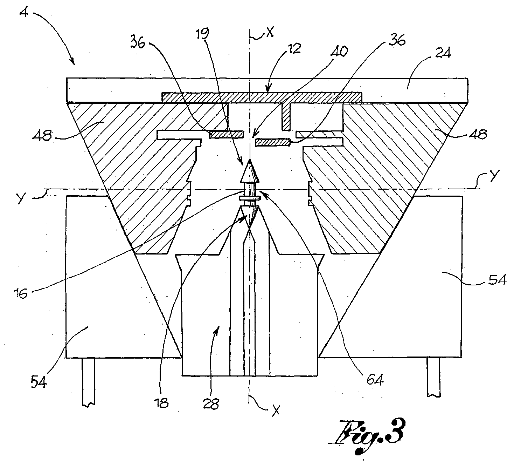

For instance, the partial aperture of the mould 4 (figure 3) takes place by the reciprocal distancing of the plugs 48 in a transversal direction Y-Y, essentially perpendicular to the connection path of the coupling element 16.

According to one possible embodiment, the plugs 48 run on respective wedges 54 having equal inclination so as to synchronise the reciprocal movement of the plugs 48 which distance themselves or come closer together in the transversal direction Y-Y while maintaining the same alignment in relation to the x-x axis.

The hot chamber 28 comprises an injection head 56 partially counter-shaped in relation to a portion of the coupling element 16 so as to support the coupling element 16 and block it in position even after the partial opening of the mould 4 and during the subsequent connection of the coupling element 16 in its respective seat 40. For instance, the injection head 56 is at least partially counter-shaped to the head 18 of the coupling element 16.

Advantageously, the injection head 56 can be,moved axially in relation to the hot chamber 28 so as to push and connect the coupling element 16 against the seat 40 of the component body 12.

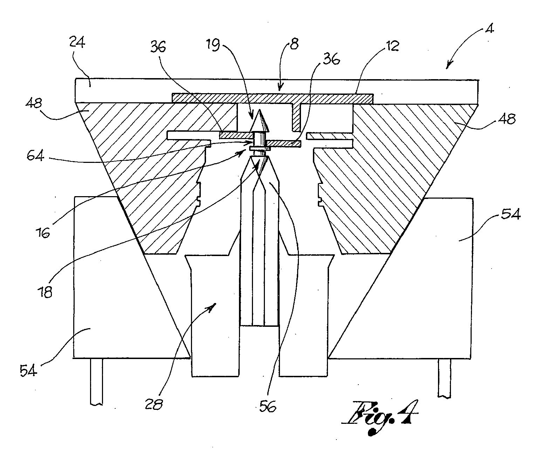

The insertion of the coupling element 16 into its seat 40 inside the mould 4 (figure 4) is then performed.

Preferably, the connection is by means of a shaped coupling, for instance snap-fit, between the base 19 of the coupling element 16 and the seat 40. For instance, the second injection chamber 52 is shaped so as to create, on the respective coupling element 16, a narrowing 64 defined by the head 18 and by the base 19 which thereby identify a pair of undercuts 68.

Said necking 64 is able to couple with play in the seat 40 of the component body 12, so as to create with the undercuts 68 a bilateral axial bond between the coupling element 16 and the component body 12.

Preferably, the necking 64 is smaller than the seat 40 so as to enable the housing of the coupling element 16 inside the seat 40 with play. According to a further embodiment the coupling element 16 comprises a collar 72 positioned between the head 18 and the base 19 so as to form a stop in the insertion of the coupling element 16 in the seat 40. In other words, the collar 72 is bigger than the seat 40 and forms a limit to the insertion path of the coupling element 16 in the seat 40.

After connecting the various snap-fit elements 16 in their respective seats 40, and having thereby already assembled the component 8, the component 8 is then expelled from the mould 4.

As seen, the component is expelled already assembled and therefore needs no further assembly: in other words it can be fitted to a relative support straight away using the shaped coupling of the snap-fit elements 16.

As may be seen from the above description, the method of the present invention makes it possible to overcome the drawbacks presented of the known method.

Specifically, the method makes it possible to produce the component provided with the relative snap-fit elements in a single operation; in fact, upon extraction from the mould, the component comes out already provided with all the snap-fit elements.

This way the subsequent assembly phase of the snap-fit elements is eliminated entirely and the time and cost of producing the said component is considerably reduced.

In fact, the moulding phase of the component according to the present invention essentially requires the same time as the traditional moulding of the same without the snap-fit elements, with the difference that the subsequent phase of manually assembling the snap-fit elements is avoided.

The component extracted from the mould can therefore be directly fitted under pressure to the relative panel or support.

Advantageously, the snap-fit elements are produced by direct moulding inside the mould of the component and therefore cannot be lost in the assembly station with consequent reduction of swarf and costs, as well as time.

Advantageously, the moulds can be modified so as to change the geometry of the snap-fit elements according to specific requirements.

Advantageously, on completion of moulding the snap-fit elements are already assembled with the component despite not being one piece with the same and thus being able to move with play in relation to the said component.

This way the assembly operation of the component to the relative support or panel is simplified and the snap-fit elements can adapt, being shifted and/or distorted as needed to the misalignments caused by the differences of dimensional tolerance between the component and the relative support.

The assembly phase of the component to the support is thereby speeded up and the risk that the snap-fit elements may break during the snap-fit assembly phase is reduced. In such case however, the damaged coupling element may be replaced, inserting it manually if required into the relative seat of the component.

Advantageously, it is possible to mould the snap-fit elements directly in the mould using any polymer material suitable for the specific assembly requirements.

## Claims

1. Moulding method for moulding a moulded component (8) provided with a component body (12) and at least one coupling element (16) to attach the component (8) to a relative support, the method comprising the steps of:
- predisposing a mould (4) comprising at least one moulding cavity (24), a punch (23), a hot chamber (28) for the injection of a plastic material,
- closing the mould (4) so that the moulding cavity (24) and the punch (23) define a first injection chamber (32) which reproduces the shape of the component body (12) in negative and having at least one plate (36) provided with a seat (40) able to receive said coupling element (16),
- making a first injection of plastic material inside the first injection chamber (32),
- predisposing at least one plug (48) which defines, inside the mould (4), a second injection chamber (52) reproducing in negative the shape of at least one coupling element (16) suitable for inserting in said seat (40), the second injection chamber (52) being fluidly separate from the first injection chamber (32),
- making a second injection of plastic material inside the second injection chamber (52) so as to mould, in the same mould (4) both the component body (12) and the coupling element (16), the component body (12) and the coupling element (16) being moulded separately and independently of each other,
- connecting the coupling element (16) in the relative seat (40) inside the mould (4),
- expelling from the mould (4) the component (8) with the coupling element (16) already assembled,
**characterised by** the fact that
the hot chamber (28) comprises an injection head (56) partially counter-shaped to a head (18) of the coupling element (16) so as to sustain the coupling element (16) and block it in position even after partial opening of the mould (4) and during the connection of the coupling element (16) in the respective seat (40), said head (18) being able to form a shaped coupling with a support of the component (8).

2. Method according to claim 1, wherein the mould (4) comprises a pair of opposite plugs (48) which, in a closed configuration, define the first and the second injection chamber (32,52) fluidly separate from each other.

3. Method according to claim 2, wherein said plugs (48) are each made in one piece.

4. Method according to claim 2 or 3, wherein said plugs (48) define with the moulding cavity (24) a portion of the component body (12) so as to identify a number of plates (36) with relative seats (40), the plates (36) being mechanically connected to said component body (12).

5. Method according to any of the previous claims, wherein the mould (4) comprises a number of second injection chambers (52) each able to mould a coupling element (16), all the second injection chambers (52) being fluidly separate from each other and from the first injection chamber (32).

6. Method according to any of the previous claims, wherein the punches (24) define each seat (40) positioning it in line with the second injection chamber (52) so as to mould the coupling element (16) in line with the respective seat (40).

7. Method according to any of the previous claims, wherein between the first injection and the second injection the mould (4) remains closed so as to mould the coupling element (16) in a fixed position aligned with the respective seat (40) of the component body (12).

8. Method according to any of the previous claims wherein, after the second injection, the mould (4) is partially opened so as to make available a connection path of the coupling element (16) towards the seat thereof (40).

9. Method according to claim 8, wherein the partial opening of the mould (4) takes place by means of reciprocally distancing the plugs (48) in a transversal direction (Y-Y) essentially perpendicular to the connection path of the coupling element (16).

10. Method according to any of the previous claims, wherein the injection head (56) is shaped so as to form on the head (18) of the coupling element (16) at least one elastic tab (20) able to form a snap-fit coupling with the relative support of the component (8).

11. Method according to any of the previous claims, wherein the injection head (56) can be moved along an axis (X-X) so as to push and connect the coupling element (16) against the seat (40) of the component body (12).

12. Method according to any of the previous claims, wherein the connection phase of the coupling element (16) in the seat (40) takes place by pushing the coupling element (16) parallel to the axis X-X from the side of the head (18) against the plate (36), forcing a base (19) of the coupling element (16), opposite the head (18) inside the seat (40).

13. Method according to any of the previous claims, wherein the second injection chamber (52) is shaped so as to create, on the respective coupling element (16), a necking (64) defined by a pair of undercuts (68) and able to couple with the seat (40) of the component body (12) so as to create a bilateral axial bond between the coupling element (16) and the component body (12).

14. Method according to claim 13, wherein said necking (64) is smaller than the seat (40) so as to enable the housing of the coupling element (16) inside the seat (40) with play.

15. Method according to any of the previous claims, wherein the first and the second injections foresee the use of plastic materials different from each other.

## Patentansprüche

1. Formverfahren zum Formen einer Formkomponente (8), die mit einem Komponentenkörper (12) und wenigstens einem Kopplungselement (16) versehen ist, um die Komponente (8) an einem jeweiligen Halter zu befestigen, wobei das Verfahren die folgenden Schritte umfasst:
- vorab Anordnen einer Form (4), die wenigstens einen Formhohlraum (24) umfasst, eines Presswerkzeugs (23), einer Warmkammer (28) für das Einspritzen eines Kunststoffmaterials,
- Schließen der Form (4), so dass der Formhohlraum (24) und das Presswerkzeug (23) eine erste Einspritzkammer (32) definieren, welche die Form des Komponentenkörpers (12) als Negativ reproduziert und welche wenigstens eine Platte (36) hat, die mit einer Auflage bzw. einem Sitz (40) versehen ist, der fähig ist, das Kopplungselement (16) aufzunehmen,
- Durchführen einer ersten Einspritzung aus Kunststoffmaterial im Inneren der ersten Einspritzkammer (32),
- vorab Anordnen wenigstens eines Stopfens (48), der im Inneren der Form (4) eine zweite Einspritzkammer (52) definiert, welche die Form wenigstens eines Kopplungselements (16) als Negativ reproduziert, das zum Einsetzen in den Sitz (40) geeignet ist, wobei die zweite Einspritzkammer (52) fluidmäßig von der ersten Einspritzkammer (32) getrennt ist,
- Durchführen einer zweiten Einspritzung aus Kunststoffmaterial im Inneren der zweiten Einspritzkammer (52), um in der gleichen Form (4) sowohl den Komponentenkörper (12) als auch das Kopplungselement (16) zu formen, wobei der Komponentenkörper (12) und das Kopplungselement (16) getrennt und unabhängig voneinander geformt werden,
- Verbinden des Kopplungselements (16) in dem jeweiligen Sitz (40) im Inneren der Form (4),
- Ausstoßen der Komponente (8) mit dem bereits angefügten Kopplungselement (16) aus der Form (4),
**gekennzeichnet durch** die Tatsache, dass
die Warmkammer (28) einen Einspritzkopf (56) umfasst, der teilweise als Gegenstück zu einem Kopf (18) des Kopplungselements (16) geformt ist, um das Kopplungselement (16) aufzunehmen und es selbst nach einer teilweisen Öffnung der Form (4) und während des Verbindens des Kopplungselements (16) in dem jeweiligen Sitz (40) in seiner Position zu sperren, wobei der Kopf (18) fähig ist, eine Formkopplung mit einem Halter der Komponente (8) zu bilden.

2. Verfahren nach Anspruch 1, wobei die Form (4) ein Paar entgegengesetzter Stopfen (48) umfasst, die in einem geschlossenen Aufbau die erste und zweite Einspritzkammer (32, 52) fluidmäßig getrennt voneinander definieren.

3. Verfahren nach Anspruch 2, wobei die Stopfen (48) jeweils in einem Stück gefertigt sind.

4. Verfahren nach Anspruch 2 oder 3, wobei die Stopfen (48) mit dem Formhohlraum (24) einen Abschnitt des Komponentenkörpers (12) definieren, um eine Anzahl von Platten (34) mit jeweiligen Sitzen (40) zu bestimmen, wobei die Platten (36) mechanisch mit dem Komponentenkörper (12) verbunden sind.

5. Verfahren nach einem der vorhergehenden Ansprüche, wobei die Form (4) eine Anzahl zweiter Einspritzkammern (52) umfasst, von denen jede fähig ist, ein Kopplungselement (16) zu formen, wobei alle die zweiten Einspritzkammern (52) fluidmäßig voneinander und von der ersten Einspritzkammer (32) getrennt sind.

6. Verfahren nach einem der vorhergehenden Ansprüche, wobei die Presswerkzeuge (24) jeden Sitz (40) definieren und ihn auf einer Linie mit der zweiten Einspritzkammer (52) positionieren, um das Kopplungselement (16) auf einer Linie mit dem jeweiligen Sitz (40) zu formen.

7. Verfahren nach einem der vorhergehenden Ansprüche, wobei die Form (4) zwischen der ersten Einspritzung und der zweiten Einspritzung geschlossen bleibt, um das Kopplungselement (16) in einer festen Position zu formen, die mit dem jeweiligen Sitz (40) des Komponentenkörpers (12) ausgerichtet ist.

8. Verfahren nach einem der vorhergehenden Ansprüche, wobei die Form (4) nach der zweiten Einspritzung teilweise geöffnet wird, um einen Verbindungsweg des Kopplungselements (16) in Richtung seines Sitzelements (40) verfügbar zu machen.

9. Verfahren nach Anspruch 8, wobei die Teilöffnung der Form (4) mittels wechselseitigem Beabstanden der Stopfen (48) in einer Transversalrichtung (Y-Y) im Wesentlichen senkrecht zu dem Verbindungsweg des Kopplungselements (16) stattfindet.

10. Verfahren nach einem der vorhergehenden Ansprüche, wobei der Einspritzkopf (56) derart geformt ist, dass er auf dem Kopf (18) des Kopplungselements (16) wenigstens einen elastischen Vorsprung bzw. Lappen (20) bildet, der fähig ist, eine Schnappverbindung mit dem jeweiligen Halter der Komponente (8) zu bilden.

11. Verfahren nach einem der vorhergehenden Ansprüche, wobei der Einspritzkopf (56) entlang einer Achse (X-X) bewegt werden kann, um das Kopplungselement (16) gegen den Sitz (40) des Komponentenkörpers (12) zu drücken und damit zu verbinden.

12. Verfahren nach einem der vorhergehenden Ansprüche, wobei die Verbindungsphase des Kopplungselements (16) in dem Sitz (40) durch Schieben des Kopplungselements (16) von der Seite des Kopfs (18) parallel zu der Achse X-X gegen die Platte (36) stattfindet, wobei eine Basis (19) des Kopplungselements (16) entgegengesetzt zu dem Kopf (18) ins Innere des Sitzes (40) gezwungen wird.

13. Verfahren nach einem der vorhergehenden Ansprüche, wobei die zweite Einspritzkammer (52) geformt ist, um auf dem jeweiligen Kopplungselement (16) eine Verengung (64) zu erzeugen, die durch ein Paar von Unterschneidungen (68) definiert wird und die fähig ist, mit dem Sitz (40) des Komponentenkörpers (12) zu koppeln, um eine bilaterale axiale Verbindung zwischen dem Kopplungselement (16) und dem Komponentenkörper (12) zu erzeugen.

14. Verfahren nach Anspruch 13, wobei die Verengung (64) kleiner als der Sitz (40) ist, um die Unterbringung des Kopplungselements (16) im Inneren des Sitzes (40) mit einem Spiel zu ermöglichen.

15. Verfahren nach einem der vorhergehenden Ansprüche, wobei die ersten und zweiten Einspritzungen die Verwendung von voneinander verschiedenen Kunststoffmaterialien vorsehen.

## Revendications

1. Procédé de moulage destiné à mouler un composant moulé (8) doté d'un corps (12) de composant et d'au moins un élément d'accouplement (16) pour fixer le composant (8) à un support relatif, le procédé comprenant les étapes consistant à :
- prédisposer un moule (4) comprenant au moins une cavité de moulage (24), un poinçon (23), une chambre chaude (28) pour l'injection d'une matière plastique,
- fermer le moule (4) de sorte que la cavité de moulage (24) et le poinçon (23) délimitent une première chambre d'injection (32) qui reproduit la forme du corps (12) de composant en négatif et comportant au moins une plaque (36) dotée d'un logement (40) pouvant recevoir ledit élément d'accouplement (16),
- effectuer une première injection de matière plastique à l'intérieur de la première chambre d'injection (32),
- prédisposer au moins un bouchon (48) qui délimite, à l'intérieur du moule (4), une seconde chambre d'injection (52) reproduisant en négatif la forme d'au moins un élément d'accouplement (16) approprié pour être introduit dans ledit logement (40), la seconde chambre d'injection (52) étant fluidiquement séparée de la première chambre d'injection (32),
- effectuer une seconde injection de matière plastique à l'intérieur de la seconde chambre d'injection (52) de manière à mouler, dans le même moule (4) à la fois le corps (12) de composant et l'élément d'accouplement (16), le corps (12) de composant et l'élément d'accouplement (16) étant moulés séparément et indépendamment l'un de l'autre,
- relier l'élément d'accouplement (16) dans le logement relatif (40) à l'intérieur du moule (4),
- expulser du moule (4) le composant (8) avec l'élément d'accouplement (16) déjà assemblé,
**caractérisé par le fait que**
la chambre chaude (28) comprend une tête d'injection (56) partiellement contre-formée sur une tête (18) de l'élément d'accouplement (16) de manière à soutenir l'élément d'accouplement (16) et à le bloquer en position même après l'ouverture partielle du moule (4) et au cours de la liaison de l'élément d'accouplement (16) dans le logement respectif (40), ladite tête (18) pouvant former un accouplement façonné avec un support du composant (8).

2. Procédé selon la revendication 1, dans lequel le moule (4) comprend une paire de bouchons opposés (48) qui, dans une configuration fermée, délimitent les première et seconde chambres d'injection (32, 52) fluidiquement séparées l'une de l'autre.

3. Procédé selon la revendication 2, dans lequel lesdits bouchons (48) font mutuellement corps.

4. Procédé selon la revendication 2 ou 3, dans lequel lesdits bouchons (48) délimitent, avec la cavité de moulage (24) une partie du corps (12) de composant de manière à identifier un certain nombre de plaques (36) avec des logements relatifs (40), les plaques (36) étant mécaniquement reliées audit corps (12) de composant.

5. Procédé selon l'une quelconque des revendications précédentes, dans lequel le moule (4) comprend un certain nombre de secondes chambres d'injection (52) pouvant chacune mouler un élément d'accouplement (16), toutes les secondes chambres d'injection (52) étant fluidiquement séparées les unes des autres et de la première chambre d' inj ection (32).

6. Procédé selon l'une quelconque des revendications précédentes, dans lequel les poinçons (24) délimitent chaque logement (40) le positionnant aligné sur la seconde chambre d'injection (52) de manière à mouler l'élément d'accouplement (16) alignée sur le logement respectif (40).

7. Procédé selon l'une quelconque des revendications précédentes, dans lequel, entre la première injection et la seconde injection, le moule (4) reste fermé de manière à mouler l'élément d'accouplement (16) dans une position fixe alignée sur le logement respectif (40) du corps (12) de composant.

8. Procédé selon l'une quelconque des revendications précédentes, dans lequel, après la seconde injection, le moule (4) est partiellement ouvert de manière à procurer un chemin de liaison de l'élément d'accouplement (16) vers son logement (40).

9. Procédé selon la revendication 8, dans lequel l'ouverture partielle du moule (4) a lieu par l'espacement réciproque des bouchons (48) dans une direction transversale (Y-Y) essentiellement perpendiculaire au chemin de liaison de l'élément d'accouplement (16).

10. Procédé selon l'une quelconque des revendications précédentes, dans lequel la tête d'injection (56) est façonnée de manière à former, sur la tête (18) de l'élément d'accouplement (16), au moins une patte élastique (20) pouvant former un accouplement par emboîtement avec le support relatif du composant (8).

11. Procédé selon l'une quelconque des revendications précédentes, dans lequel la tête d'injection (56) peut être déplacée le long d'un axe (X-X) de manière à pousser et à relier l'élément d'accouplement (16) contre un logement (40) du corps (12) de composant.

12. Procédé selon l'une quelconque des revendications précédentes, dans lequel la phase de liaison de l'élément d'accouplement (16) dans le logement (40) a lieu en poussant l'élément d'accouplement (16) parallèlement à l'axe X-X depuis le côté de la tête (18) contre la plaque (36), forçant une base (19) de l'élément d'accouplement (16), à l'opposé de la tête (18) à l'intérieur du logement (40).

13. Procédé selon l'une quelconque des revendications précédentes, dans lequel la seconde chambre d'injection (52) est façonnée de manière à créer, sur l'élément d'accouplement (16) respectif, une striction (64) délimitée par une paire de dégagements (68) et pouvant s'accoupler avec le logement (40) du corps (12) de composant de manière à créer une liaison axiale bilatérale entre l'élément d'accouplement (16) et le corps (12) de composant.

14. Procédé selon la revendication 13, dans lequel ladite striction (64) est plus petite que le logement (40) de manière à permettre l'introduction de l'élément d'accouplement (16) à l'intérieur du logement (40) avec du jeu.

15. Procédé selon l'une quelconque des revendications précédentes, dans lequel les première et seconde injections prévoient l'utilisation de matières plastiques différentes l'une de l'autre.
